# EUROPEAN PATENT SPECIFICATION

(11) **EP 0 642 561 B1**
(45) Date of publication and mention of the grant of the patent: **08.10.1997**
(21) Application number: 93909991.7
(22) Date of filing: 14.05.1993
(51) Int. Cl.: C09K 7/06, C09K 7/02

(54) **FUNCTIONAL FLUID**
FUNKTIONELLE FLUESSIGKEITEN
FLUIDE DE TRAVAIL

(30) Priority: 18.05.1992 GB 9210578
(43) Date of publication of application: 15.03.1995
(73) Proprietor: EXXON CHEMICAL PATENTS INC., Linden, New Jersey 07036-0710 (US)
(72) Inventor: GODWIN, Allen David, Singapore 1025 (SG); SOLLIE, Tor, N-0495 Oslo (NO)
(74) Representative: Bawden, Peter Charles
(86) International application number: EP9301208
(87) International publication number: WO9323491

(56) References cited:
- EP-A- 386 636
- EP-A- 0 382 071
- EP-A- 0 398 113
- EP-A-03 744 672
- EP-A-03 866 638
- EP-A- 0 374 672
- EP-A- 0 382 071
- EP-A- 0 386 636
- EP-A- 0 386 638
- EP-A- 0 398 113

## Description

This invention relates to drilling fluids, more especially to such fluids for use in well drilling.

Drilling of oil or gas wells normally involves the circulation of a fluid through the drill string and out through nozzles in the drill bit, the fluid being returned through the annular passage formed between the drill string and the bore. The fluid cools and lubricates the drill, provides a hydrostatic head to counterbalance pressures, and removes the cuttings from the drill bit. Such fluids are also employed in other areas, for example, geothermal drilling, drilling for water and scientific drilling.

Oil-containing drilling emulsions have been used for many years for these purposes. The emulsion may be in the form of a water-in-oil or an oil-in-water emulsion, in each case normally having finely divided solids suspended therein, and containing a variety of additives for various purposes, e.g., emulsifiers, surfactants, pH control agents, biocides, corrosion inhibitors, weight and viscosity regulators, oxygen and sulphur scavengers, and fluid-loss additives.

The modern technological and ecological demands on the oil phase components of drilling fluids now make it desirable for the following requirements to be borne in mind. The material should be hydrophobic and of low polarity (to minimize swelling of clays and shales). It should have as high a flash point as possible, advantageously above 100°C, and preferably above 130°C, and more preferably above 150°C. Its viscosity at 20°C should be at most 20 cSt (20 mm²/s), advantageously at most 15 cSt, especially at most 12 cSt, and preferably at most 10 cSt, and it should have a pour point below -15°C, to be pumpable between -5°C and -10°C. It should be a poor solvent for CO₂ and H₂S. It should remain physically and chemically stable at temperatures up to 250°C, pressures up to 8000 p.s.i. (about 55 MPa) and high pH (up to 10 lb of lime per barrel, about 30 kg of lime per m³ or pH 11) while being biodegradable under aerobic and preferably under anaerobic conditions. The material and its degradation products should have low toxicity both to mammals and to marine flora and fauna, and little odour. All these desiderata must be borne in mind, as well as the prime purpose of the material, to provide the best possible lubricity.

The oil phase was traditionally provided by a hydrocarbon oil, often with an aromatic content; concern for the environment has recently required hydrocarbon oils used for the purpose to be largely aliphatic and more recently, because aliphatic hydrocarbons are not readily biodegradable, hydrocarbons are being increasingly restricted in their use. Many replacements for hydrocarbons have been suggested; these have primarily been aliphatic materials with functional groups that facilitate biodegradation, for example, ester groups.

In EP-A-374671, 374672, 386636 and 386638 various esters derived from aliphatic alcohols and acids are proposed for uses in drilling muds. However, the stability of esters to saponification under the conditions in which drilling muds are used has up to now proved insufficient, and problems with odour, viscosity increase, and poor separation of cuttings from the fluid, have been encountered.

There accordingly remains a need for a drilling fluid meeting the ecological demands presently being made or likely to be made in the near future.

In the first aspect, the present invention provides the use in the oil phase of a drilling fluid of
(i) at least one carboxylic acid ester, advantageously a hydrocarbyl carboxylic acid ester, in which in the carboxylic acid moiety there is a carbon atom adjacent to the carbonyl group, which α-carbon atom carries no hydrogen atoms, or
(ii) at least one carboxylic acid ester in which in the alcohol moiety the carbon atom that carries the esterified hydroxyl groups carries no hydrocarbon atoms. Ester (i) is presently preferred, and will be referred to below as the first embodiment.

The term "hydrocarbyl" as used herein means that the radical concerned is primarily composed of hydrogen and carbon atoms but does not exclude the presence of other atoms or groups in a proportion insufficient to detract from the substantially hydrocarbon characteristics of the radical concerned.

Advantageously, in the first embodiment the α-carbon atom in the acid is a quaternary carbon atom, and such acids, which are preferred, are referred to herein for simplicity, as they are in certain literature, as neo acids.

Preferably, the three substituents on the α-carbon atom are all alkyl groups, and such acids are referred to herein as in certain literature as trialkylacetic acids. It is to be understood, however, that while neo acids and more especially trialkylacetic acids are preferred, other acids in which the α-carbon atom is hydrogen free may be employed. As examples of such acids, there may be mentioned benzoic, toluic, phthalic, isophthalic, terephthalic, furoic, thenoic, nicotinic, isonicotinic, oxalic, methacrylic and propiolic acids.

As examples of the preferred trialkylacetic acids, there may be mentioned, preferably, those having a total of from 4 to 13, more especially 5 to 10, carbon atoms, including the carbonyl carbon of the acid, including trimethylacetic (2,2-dimethylpropionic); 2,2-dimethylbutyric, 2-ethyl-2-methylbutyric, triethylacetic (2,2-diethylbutyric), 2,2-diethyl-3-methylbutyric, 2-ethyl-2,3,3-trimethylbutyric, 2,2-diethyl-3,3-dimethylbutyric, 2,2-dimethylvaleric, 2-ethyl-2-methylvaleric, 2,2-diethylvaleric, 2,2,3-trimethylvaleric, and 2,2-diethyl-3-methylvaleric acids and mixtures of such acids, especially mixtures of acids having 9 and 10 carbon atoms, mixtures of acids having 10 carbon atoms, and mixtures of such acids with other trialkyl acetic acids having a greater number of carbon atoms, for example a mixture of acids containing from 9 to 21 carbon atoms. Neopentanoic, neooctanoic, neononanoic and neodecanoic acids are preferred.

While monobasic acids are preferred, di- and other polybasic acids may be used, for example, 2,2,3,3-tetramethylbutanedioic acid.

As examples of groups that may be linked to the α-carbon atom, there may be mentioned, in addition to the preferred unsubstituted alkyl radicals, saturated or unsaturated, substituted or unsubstituted carbocylic or heterocyclic radicals, substituted or unsubstituted unsaturated aliphatic radicals, and substituted alkyl radicals. The α-carbon atom may carry three such radicals which may be the same or different, or two such radicals, the same or different, and an alkyl radical.

It is believed, although the applicants do not wish to be bound by any theoretical considerations, that in the first embodiment, the absence of hydrogen from the α-carbon atom contributes to the thermal stability of the esters used in the present invention (an important factor since temperatures in excess of 175°C are encountered in deep wells) while in the preferred compounds in which the α-carbon atom is a quaternary atom the steric hindrance caused by the substituents on that atom contributes to hydrolytic stability.

The alcohol moiety of the ester in the first embodiment is advantageously hydrocarbyl, and preferably aliphatic, more especially saturated aliphatic. Advantageously, the alcohol is a linear alcohol, to assist in biodegradability under aerobic conditions and to maximize lubricity, but branched chain, and mixtures of branched and linear alcohols may also be used. Mixtures of alcohols of different chain length may also be used and may prove advantageous. Examples of mixtures are those obtainable by hydroformylation of a linear olefin or a mixture of linear olefins, which products (oxo process alcohols) will normally contain a proportion of branched alcohols, predominantly the C2-methyl branched product, resulting from the manufacturing process used. Commercially available materials of this type include LIAL alcohols, containing from 30 to 50% linear components, for example LIAL 123, comprising a mixture of C₁₁ to C₁₃ alcohols, SYNPROL alcohols, containing about 50% linear components, e.g., SYNPROL 35, comprising a mixture of C₁₃ to C₁₅ alcohols, ACROPOL alcohols, e.g., ACROPOL 9 or 11 comprising C₉ or C₁₁ alcohols respectively, and ACROPOL 35 comprising a C₁₃ to C₁₅ alcohol mixture, each with about 65% linear components, and NEODOL alcohols, e.g., NEODOL 11, 23 and 45, comprising C₁₁ alcohols, a C₁₂ and C₁₃ alcohol mixture, and a C₁₄ and C₁₅ alcohol mixture respectively, each with about 75% linear components. (LIAL, SYNPROL, ACROPOL, and NEODOL are trade marks.) Alcohols obtainable from natural sources, both animal and vegetable, e.g., from palm oil, coconut oil, babassu oil, and tall oil, may be employed.

Advantageously, the alcohol contains, or the mixture of alcohols is such that the average number is, from 7 to 16, and preferably from 8 to 12, carbon atoms.

It is possible to use polyhydric alcohols, especially diols, triols, and tetrols, especially alkylene diols, for example ethylene glycol, neopentyl glycol, 1,2, or 1,3-propanediol, trimethylolpropane, 1,4-butanediol, pentaerythritol, or 1,6-hexane diol as the alcohol component either alone or, more especially, in admixture with a monohydric alcohol as described above.

The ester advantageously contains at most 25, preferably from 14 to 25, and more preferably from 16 to 24, carbon atoms.

Preferred esters include n-hexadecyl neopentanoate, n-decyl neooctanoate, n-decyl, n-undecyl, and n-dodecyl neononanoates, and n-octyl, n-decyl, and n-dodecyl decancates.

In the second, presently less preferred, embodiment, the carboxylic acid moiety is advantageously a hydrocarbyl group, preferably a linear or branched saturated or unsaturated aliphatic radical, the number of carbon atoms advantageously being as stated to be advantageous in the first embodiment. Although for reasons of manufacturing facility the acids of the first embodiment are not preferred, these may be used; the acids are, however, advantageously those with linear or branched alkyl or alkenyl radicals.

In the second embodiment, in the alcohol moiety, the carbon atom carrying the esterified hydroxyl group is advantageously a tertiary carbon atom, and advantageously all its valencies other than that satisfied by the oxygen atom are satisfied by hydrocarbyl, especially alkyl, groups. Presently prefered alcohols include t-butyl and t-amyl alcohols.

The second embodiment ester advantageously contains at most 25, preferably from 14 to 25, and more preferably from 16 to 24, carbon atoms.

It is within the scope of the invention to employ two or more esters in which one or more may be of the first embodiment and one or more of the second.

The esters are made by methods that are per se known, most conveniently by reaction between the acid and the alcohol in the presence of a catalyst, or by reaction of the acid chloride with the alcohol.

For details of such procedures, the reader is referred to Kirk-Othmer, Encyclopedia of Chemical Technology, 3rd Edition, Vol. 4, pp 863 to 871, and Vol. 9, pp 291 to 310; Houben-Weil, Methoden der Organische Chemie, 4th Edition, Band V/3, pp 862 to 873, W.J. Hickinbottom, "Reactions of Organic Compounds" (Longmans, Green, 1959), pp 291 to 294, and especially "Neoacids - Properties, Chemistry and Applications", Exxon Chemical Americas, 1989, the disclosures of all of which are incorporated herein by reference.

As catalysts for direct esterification, there may be mentioned, for example inorganic acids, e.g., sulphuric, hydrochloric, and Lewis acids (usually boron trifluoride); organic acids, e.g., p-toluene sulphonic, and methane sulphonic acids, and cation exchange resins, or organometallic catalysts, e.g., tin and titanium compounds. Using the acid chlorides, esters may be formed with, for example, thionyl chloride, phosphorus tri or pentachloride, or phosgene as catalysts.

The acids, acid chlorides and alcohols may be used in the pure state or as technical grade products, which contain a range of materials of molecular weights lower and higher than that designated.

The invention further provides a drilling fluid comprising an emulsion having an aqueous phase and an oil phase, in which the oil phase comprises the ester-comprising product obtainable, and advantageously obtained, by the procedures defined above.

The ester, or mixture of esters, used in accordance with the invention advantageously has a pour point as determined by ASTM D97 below -15°C, preferably below -20°C and more preferably below -30°C. The ester, or mixture of esters, advantageously has a viscosity, as determined by ASTM D445 at 20°C, of at most 20 cSt, preferably from 2 to 15, more preferably from 5 to 12, and most preferably 3 to 8, cSt (mm²/s).

The invention also provides a drilling fluid comprising an emulsion comprising at least one carboxylic acid ester having a carbon atom adjacent to the carbonyl group of the acid, which carbon atom carries no hydrogen atoms or an ester in which in the alcohol moiety the carbon atom carrying the esterified hydroxyl group carries no hydrogen atoms, water, at least one member selected from surfactants and emulsifiers, and at least one member selected from clay, a halide of an alkaline earth or alkali metal, and weighting material.

The emulsion may be an oil-in-water emulsion or, preferably, a water-in-oil emulsion. The working material of the oil phase may consist essentially of an ester according to the invention, or may comprise the ester together with other oils. Advantageously, the ester constitutes at least 40%, preferably at least 60%, by weight, of the oil phase. Other components may include those conventionally used, for example, the esters of natural or synthetic saturated or unsaturated fatty acids with mono- or poly-functional alcohols, ethers, optionally alkoxylated amines, ether alcohols, ether acids, ether esters, ether amines, and mineral oils (although these are not preferred for the reasons given above).

When the drilling fluid according to the invention is an oil-in-water emulsion, the oil phase advantageously represents from 5 to 65%, preferably from 5 to 50%, more preferably from 5 to 30%, and most preferably from 5 to 10%, by weight, based on the total weight of oil phase and unweighted aqueous phase.

When the drilling fluid is a water-in-oil emulsion, the oil phase advantageously represents from 55 to 95%, preferably from 75 to 95%, and most preferably from 75 to 90%, based on the total weight of oil phase and unweighted aqueous phase.

As indicated above, the drilling fluid advantageously comprises surfactants and/or emulsifiers, groups which to some extent overlap.

As surfactants there may be mentioned, for example, a non-ionic surfactant, for example, polyalkylene ether derivatives of alcohols and alkyl phenols, advantageously having from 3 to 30 alkylene, preferably ethylene, oxy groups and from 8 to 20 carbon atoms in the hydrocarbon chain. Preferably, there are used polyethylene oxy derivatives with from 5 to 20, more preferably from 5 to 15, repeat units with a linear or branched primary alcohol from 8 to 18, more preferably from 10 to 16, carbon atoms in the chain or with an alkyl phenol with a linear or branched alkyl group with from 6 to 14 carbon atoms. Most preferably there is used an ethoxylated fatty alcohol having from 5 to 20, advantageously 7 to 10, ethoxy groups and 11 carbon atoms in the chain which may be linear or branched.

The surfactant may alternatively be a cationic surfactant, for example an imidazoline derivative, for example a fatty imidazoline salt of a strong monoprotic acid, for example one as described in U.S. Patent No. 3585051, or a quaternary ammonium salt having at least one long chain alkyl or alkenyl substituent, e.g., one having from 8 to 20 carbon atoms, the remaining substituents being alkyl groups with up to 4 carbon atoms, especially methyl, the anion being, for example chloride, bromide, iodide, phosphate, sulfamate, or acetate.

As emulsifier there may be mentioned fatty amine alkoxylates, aromatic alkoxylates or an ether amine alkoxylate. Advantageously, however, the emulsifier is a quaternary ammonium salt, e.g., a long chain alkyl trimethyl or dialkyl dimethyl ammonium chloride, and preferably the quaternized reaction product of an oxyalkylated polyamine with a fatty acid, for example the product of reaction of a soya or coco fatty acid, or a blend of the two, with diethylene triamine, ethoxylation, and subsequent quaternization with methyl chloride.

The drilling fluids of the invention may also contain a viscosity regulator, e.g., clay, for example, bentonite, which may be treated, e.g., with peptizing agents or with organic salts, to render them organophilic. Suitable proportions are, for example, up to 30%, preferably from 5 to 20%, by weight, based on the weight of unweighted aqueous phase and oil phase.

The drilling fluids may also contain weighting agents, for example, barium sulphate, to increase the specific gravity of the fluid, e.g., up to 2.5, and more advantageously up to 1.6.

The drilling fluids may also contain, in the aqueous phase, a soluble alkali or alkaline earth metal salt, especially calcium or potassium chloride, in an amount up to that needed to saturate the aqueous phase.

The drilling fluids may also contain a fluid-loss additive, for example a hydrophobic lignite, to ssist in developing a liquid-impervious film on the bore wall. Suitable proportions are, for example, up to 7% by weight, based on the weight of the oil phase.

The following Examples illustrate the invention:

### Example 1

946 g (5.5 moles) of neodecanoic acid, 859.2 g (6.6 moles) of n-octanol and 11.7 g of (i-C₃H₇O)₄Ti catalyst were introduced into a reactor vessel equipped with a Dean-Stark trap and a condenser. After degassing, the reaction mixture was heated at atmospheric pressure with stirring, while passing nitrogen through the mixture. The temperature was gradually increased to 209°C over a period of three hours. Over the next one and a quarter hours the temperature was raised to 215°C and the pressure decreased to 700 mm Hg (93 kPa), that temperature and pressure then being maintained for a further twenty five minutes. Over a further one and three quarter hours the temperature was allowed to fall to 200°C while the pressure was reduced to 300 mm Hg (40 kPa).

Samples were taken during the heating process and analysis of the final sample showed a conversion of acid to ester of 99%.

The reaction mixture was neutralized by adding 18 g of Na₂CO₃ and heating at 130°C for half an hour, with stirring. After filtering, the product was washed first with 5% by weight aqueous sodium hydroxide and then three times with water.

The washed product was then stripped at 130°C to 140°C and 600 to 700 mmHg (80 to 93 kPa) to remove unreacted alcohol, first steam and then nitrogen being passed through the product during the stripping step.

The stripped product was an ester having a viscosity at 20°C of 7.0 cSt (7 mm²/s), a flash point of 150°C and a pour point below -42°C.

### Example 2

1023 g (6 moles) of neodecanoic acid, 1092 (6.9 moles) of n-decanol and 13.8 g of C₁₂H₂₈O₄Ti were reacted using the procedure described in Example 1. Initial heating over a period of twenty five minutes raised the temperature from 23°C to 110°C, following which the temperature was increased gradually over a period of eight hours to a final temperature of 230°C. Analysis of a sample showed that a 95.9% conversion of acid to ester had occurred.

The reaction mixture was neutralized using 21 g of Na₂CO₃. After filtration and four washes with water the product was stripped at 135°C to 150°C and 640 to 20 mm Hg (85 to 3 kPa) to remove unreacted alcohol.

The stripped product had a viscosity at 20°C of 11.1 cSt (11.1 mm²/s), a flash point of 168°C and a pour point below -42°C.

### Example 3

1204 g (70 moles) of neodecanoic acid , 1339.6 g (8.4 moles) of Acropol 91 (a mixture of C₉ and C₁₁ alcohols, 65% linear and the rest mostly α-methyl isomers) and 16.4 g of C₁₂H₂₈O₄Ti were reacted using the procedure described in Example 1. The temperature was raised to 110°C over a period of twenty five minutes, following which the temperature was gradually increased to 180°C over a period of three hours. Over the next twenty minutes the pressure was decreased to 300 mm Hg (40 kPa). The pressure was kept at 300 mm Hg (40 kPa) or just below for a further seventeen hours, the temperature being increased gradually to 225°C.

The product was neutralized at 90°C using 25.2 g of Na₂CO₃. After filtration and four washes with water the product was stripped at 175°C to 200°C and over a pressure range of 300 to 30 mmHg (40 to 4 kPa).

The ester product had a viscosity at 20°C of 11.4 cSt (11.4 mm²/s), a flash point of 162°C and a pour point below -42°C.

### Example 4

The stability of an ester of a neo acid was compared with that of esters of linear and branched acids at 60°C in the presence of alkali.

The esters used were
1. The n-octyl ester of neodecanoic acid.
2. The 2-ethylhexyl ester of n-dodecanoic acid.
3. A branched C₁₃ alkyl ester of a branched C₉ alkanoic acid.

80 g of each ester were shaken with 15 g of surfactant (Marlowet LUX, Hüls AG.) and 5 g of 0.01 N aqueous sodium hydroxide (pH = 12), and the blended samples immersed in a water bath maintained at 60°C. The initial acidity of each original ester was measured, as was that of each blend, and then the change in acidity with time at 60°C was monitored. The results are shown in the Tables below:

**Table 1**

| | Acidity (mg KOH/g) Ester | | |
|---|---|---|---|
| | 1 | 2 | 3 |
| Ester | 0.28 | 0.34 | 0.45 |
| Blend | 2.47 | 2.52 | 2.47 |

**Table 2**

| Change in Acidity | | | |
|---|---|---|---|
| Time (Hours) | Acidity Increase of Blend: (mg KOH/g) | | |
| | Ester 1 | Ester 2 | Ester 3 |
| 24 | 0 | 0 | 0.05 |
| 90 | 0.11 | 0.40 | 0.17 |
| 185 | 0.11 | 0.29 | 0.22 |
| 275 | 0.22 | 0.45 | 0.34 |
| 490 | 0.39 | 0.79 | 0.56 |
| 675 | 0.67 | 1.29 | 0.90 |
| 815 | 0.78 | 1.58 | 1.12 |
| 1000 | 1.06 | 1.97 | 1.40 |
| 1190 | 1.34 | 2.42 | 1.74 |
| 1350 | 1.63 | 2.81 | 1.79 |

The results show that in an environment of high pH, the neo acid linear alcohol ester is more stable than an ester in which both moieties are branched and much more stable than a branched alcohol ester of a linear acid.

## Claims

1. The use in the oil phase of a drilling fluid of at least one carboxylic acid ester (i) that has a carbon atom adjacent to the carbonyl group of the acid, which carbon atom carries no hydrogen atoms or (ii) in which in the alcohol moiety a carbon atom carrying the esterified hydroxyl group carries no hydrogen atoms.

2. The use as claimed in claim 1, wherein the said carbon atom is linked to three other carbon atoms.

3. The use as claimed in claim 1, wherein the said carbon atom is linked to three hydrocarbyl radicals.

4. The use as claimed in claim 1, wherein the said carbon atom is linked to three alkyl radicals.

5. The use as claimed in any one of claims 1 to 4, wherein the acid contains from 4 to 12 carbon atoms.

6. The use as claimed in claim 5, wherein the acid contains from 5 to 10 carbon atoms.

7. The use as claimed in claim 5, wherein the acid is neopentanoic, neooctanoic, neononanoic, or neodecanoic acid.

8. The use as claimed in any one of claims 1 to 7, wherein the alcohol moiety of the ester is aliphatic.

9. The use as claimed in claim 8, wherein the aliphatic radical is saturated.

10. The use as claimed in claim 8 or claim 9, wherein in embodiment (i) the aiiphatic radical is linear.

11. The use as claimed in any one of claims 1 to 10, wherein the alcohol moiety of the ester contains from 7 to 16 carbon atoms.

12. The use as claimed in claim 11, wherein the alcohol moiety contains from 8 to 12 carbon atoms.

13. The use as claimed in any one of claims 1 to 12, wherein the ester is the ester of a monohydric alcohol and a monobasic acid.

14. The use as claimed in any one of claims 1 to 12, wherein the ester contains from 14 to 25 carbon atoms.

15. The use as claimed in claim 14, wherein the ester contains from 16 to 24 carbon atoms.

16. The use as claimed in any one of claims 1 to 15, wherein a mixture of the said esters is used.

17. A drilling fluid comprising an emulsion having an aqueous phase and an oil phase, containing an ester as defined in any one of claims 1 to 16, water, at least one member selected from surfactants and emulsifiers, and at least one member selected from clay, a halide of an alkaline earth or alkali metal, and weighting material.

18. The invention of any one of claims 1 to 17 wherein the fluid is a water-in-oil emulsion.

19. The invention of any one of claims 1 to 17, wherein the fluid is an oil-in-water emulsion.

20. The use as claimed in claim 1, wherein the ester is as specified in one of Examples 1 to 3 herein.

## Patentansprüche

1. Verwendung von mindestens einem Carbonsäureester (i), der ein Kohlenstoffatom benachbart zu der Carbonylgruppe der Säure aufweist, wobei das keine Wasserstoffatome trägt, oder (ii) bei dem in dem Alkoholanteil ein Kohlenstoffatom, das die veresterte Hydroxylgruppe trägt, keine Wasserstoffatome trägt, in der Ölphase einer Bohrflüssigkeit.

2. Verwendung nach Anspruch 1, bei der das Kohlenstoffatom an drei andere Kohlenstoffatome gebunden ist.

3. Verwendung nach Anspruch 1, bei der das Kohlenstoffatom an drei Kohlenwasserstoffreste gebunden ist.

4. Verwendung nach Anspruch 1, bei der das Kohlenstoffatom an drei Alkylreste gebunden ist.

5. Verwendung nach einem der Ansprüche 1 bis 4, bei der die Säure 4 bis 12 Kohlenstoffatome enthält.

6. Verwendung nach Anspruch 5, bei der die Säure 5 bis 10 Kohlenstoffatome enthält.

7. Verwendung nach Anspruch 5, bei der die Säure Neopentansäure, Neooctansäure, Neononansäure oder Neodecansäure ist.

8. Verwendung nach einem der Ansprüche 1 bis 7, bei der der Alkoholanteil des Esters aliphatisch ist.

9. Verwendung nach Anspruch 8, bei der der aliphatische Rest gesättigt ist.

10. Verwendung nach Anspruch 8 oder Anspruch 9, bei der in Ausführungsform (i) der aliphatische Rest linear ist.

11. Verwendung nach einem der Ansprüche 1 bis 10, bei der der Alkoholanteil des Esters 7 bis 16 Kohlenstoffatome enthält.

12. Verwendung nach Anspruch 11, bei der der Alkoholanteil 8 bis 12 Kohlenstoffatome enthält.

13. Verwendung nach einem der Ansprüche 1 bis 12, bei der der Ester der Ester eines einwertigen Alkohols und einer einbasigen Säure ist.

14. Verwendung nach einem der Ansprüche 1 bis 12, bei der der Ester 14 bis 25 Kohlenstoffatome enthält.

15. Verwendung nach Anspruch 14, bei der der Ester 16 bis 24 Kohlenstoffatome enthält.

16. Verwendung nach einem der Ansprüche 1 bis 15, bei der eine Mischung der Ester verwendet wird.

17. Bohrflüssigkeit, die eine Emulsion mit einer wässrigen Phase und einer Ölphase umfaßt, die einen Ester gemäß einem der Ansprüche 1 bis 16, Wasser, mindestens eine Substanz ausgewählt aus Tensiden und Emulgatoren und mindestens eine Substanz ausgewählt aus Ton, einem Halogenid eines Erdalkalioder Alkalimetalls und Beschwerungsmittelmaterial enthält.

18. Erfindung gemäß einem der Ansprüche 1 bis 17, bei der die Flüssigkeit eine Wasser-in-Öl-Emulsion ist.

19. Erfindung gemäß einem der Ansprüche 1 bis 17, bei der die Flüssigkeit eine Öl-in-Wasser-Emulsion ist.

20. Verwendung nach Anspruch 1, bei der der Ester wie in einem der Beispiele 1 bis 3 spezifiziert ist.

## Revendications

1. Utilisation, dans la phase huileuse d'un fluide de forage, d'au moins un ester d'acide carboxylique (i) qui a un atome de carbone adjacent au groupe carbonyle de l'acide, atome de carbone qui ne porte aucun atome d'hydrogène, ou (ii) dans lequel, dans le groupement alcool, un atome de carbone portant le groupe hydroxyle estérifié ne porte aucun atome d'hydrogène.

2. Utilisation suivant la revendication 1, dans laquelle l'atome de carbone est lié à trois autres atomes de carbone.

3. Utilisation suivant la revendication 1, dans lequelle l'atome de carbone est lié à trois radicaux hydrocarbyle.

4. Utilisation suivant la revendication 1, dans laquelle l'atome de carbone est lié à trois radicaux alkyle.

5. Utilisation suivant l'une quelconque des revendications 1 à 4, dans laquelle l'acide contient 4 à 12 atomes de carbone.

6. Utilisation suivant la revendication 5, dans laquelle l'acide contient 5 à 10 atomes de carbone.

7. Utilisation suivant la revendication 5, dans laquelle l'acide est l'acide néopentanoïque, néo-octanoïque, néononanoïque ou néodécanoïque.

8. Utilisation suivant l'une quelconque des revendications 1 à 7, dans laquelle le groupement alcool de l'ester est un groupement aliphatique.

9. Utilisation suivant la revendication 8, dans laquelle le radical aliphatique est saturé.

10. Utilisation suivant la revendication 8 ou la revendication 9, dans laquelle, dans la forme de réalisation (i), le radical aliphatique est linéaire.

11. Utilisation suivant l'une quelconque des revendications 1 à 10, dans laquelle le groupement alcool de l'ester contient 7 à 16 atomes de carbone.

12. Utilisation suivant la revendication 11, dans laquelle le groupement alcool contient 8 à 12 atomes de carbone.

13. Utilisation suivant l'une quelconque des revendications 1 à 12, dans laquelle l'ester est l'ester d'un alcool monohydroxylique et d'un mono-acide.

14. Utilisation suivant l'une quelconque des revendications 1 à 12, dans laquelle l'ester contient 14 à 25 atomes de carbone.

15. Utilisation suivant la revendication 14, dans laquelle l'ester contient 16 à 24 atomes de carbone.

16. Utilisation suivant l'une quelconque des revendications 1 à 15, dans laquelle un mélange des esters est utilisé.

17. Fluide de forage comprenant une émulsion ayant une phase aqueuse et une phase huileuse, contenant un ester répondant à la définition suivant l'une quelconque des revendications 1 à 16, de l'eau, au moins un membre du groupe consistant en surfactants et émulsionnants, et au moins un membre du groupe consistant en une argile, un halogénure de métal alcalino-terreux ou de métal alcalin et un alourdissant.

18. Invention suivant l'une quelconque des revendications 1 à 17, dans laquelle le fluide est une émulsion eau-dans-huile.

19. Invention suivant l'une quelconque des revendications 1 à 17, dans laquelle le fluide est une émulsion huile-dans-eau.

20. Utilisation suivant la revendication 1, dans laquelle l'ester est un ester spécifié dans un des exemples 1 à 3 de l'invention.
